Europäisches Patentamt

European Patent Office

Office européen des brevets

(11) Veröffentlichungsnummer: **0 331 796 B1**

(12) **EUROPÄISCHE PATENTSCHRIFT**

(45) Veröffentlichungstag der Patentschrift: **03.06.92**

(21) Anmeldenummer: **88118713.2**

(22) Anmeldetag: **10.11.88**

(51) Int. Cl.⁵: **H02G 3/26**

(54) **Verstärkte Aufhängevorrichtung für Kabel.**

(30) Priorität: **11.03.88 DE 3808145**

(43) Veröffentlichungstag der Anmeldung:
**13.09.89 Patentblatt 89/37**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**DE-U- 1 947 164**
**DE-U- 2 816 678**
**DE-U- 8 319 670**
**FR-A- 2 437 719**

**RICO KATALOG der Firma Rieht & Co GmbH,**
**1984, Seiten 16 und 17**

(73) Patentinhaber: **Rieth & Co. GmbH**
**Stuttgarter Strasse 128**
**W-7312 Kirchheim/Teck(DE)**

(72) Erfinder: **Mätzler, Eberhard, Dipl.-Ing.**
**Lisztstrasse 26**
**W-7311 Notzingen-Wellingen(DE)**

(74) Vertreter: **Rüger, Rudolf, Dr.-Ing. et al**
**Webergasse 3 Postfach 348**
**W-7300 Esslingen/Neckar(DE)**

## Beschreibung

Die Erfindung geht aus von einer Trag- oder Aufhänge-Vorrichtung für Kabel, Rohrleitungen u.dgl. mit den Merkmalen des Oberbegriffs des Anspruches 1.

Um Kabel, Rohrleitungen u.dgl. in Gebäuden zu verlegen, ist es aus dem RICO-Katalog der Firma Rieth & Co. GmbH, 1984, S. 16 und 17 bekannt, Kabeltragsysteme zu verwenden, die mit Abstand voneinander an der Wand oder der Decke des Gebäudes befestigte Stiele enthalten, an denen Ausleger sitzen, auf denen die Kabel oder Rohre entweder unmittelbar aufgelegt sind oder die der Halterung von Pritschen dienen, in denen die Kabel entlanglaufen. Die Befestigung der Stiele an der Struktur des Gebäudes geschieht mittels einer an dem Stiel angeschweißten, im wesentlichen ebenen Kopfplatte, die Öffnungen für Befestigungs- oder Stockschrauben enthält. Die Schrauben wiederum sind in Dübel eingedreht, die in Löchern in der Struktur des Gebäudes sitzen.

Die Auszugsfestigkeit des Dübels aus der Gebäudestruktur und damit die Tragfähigkeit des Stiels richtet sich einerseits nach der Größe des Dübels und andererseits nach dem Abstand, den die beiden Dübel zur Befestigung je eines Stieles voneinander haben. Ist nämlich der Abstand der Dübellöcher voneinander zu klein, so reicht die Tragfähigkeit des zwischen den Dübellöchern befindlichen Betonstückes nicht aus, um zu erreichen, daß die Summe der Tragfähigkeiten beider Dübel gleich dem Doppelten der Tragfähigkeit eines einzelnen Dübels ist. In einer großen Anzahl von Fällen ist der Stiel mit einer weit geringeren Last beaufschlagt, als es der maximalen Tragfähigkeit zweier Dübel entspricht. Entsprechend dieser üblicherweise auftretenden geringeren Belastung ist der Abstand der Schraubenlöcher in der Kopfplatte bemessen, um zu vermeiden, daß unhandlich große Kopfplatten entstehen, die Abmessungen aufweisen, die weit über dem liegen, was in einer Vielzahl von Fällen benötigt wird.

Wenn allerdings Stiele mit der Maximalbelastbarkeit gefordert sind, können die üblichen Kopfplatten wegen ihrer zu geringen Lochabstände nicht eingesetzt werden.

Aus der Praxis ist es darüber hinaus bekannt, Kopfplatten mittels einer Zwischenkonstruktion an Ankerplatten zu befestigen, die in den Decken eingelassen sind. Die Ankerplatten weisen je vier nach unten aus der Decke herausragende Bolzen auf, an denen die Stiele befestigt werden sollen. Die Abstände zwischen den Bolzen entsprechen jedoch nicht den üblichen Abständen der Schraubenlöcher in den Kopfplatten.

Aus diesem Grund ist die Zwischenkonstruktion erforderlich, die aus zwei an der Ankerplatte zu befestigenden U-Profilen und einem quer zu deren Längsrichtung verlaufenden und auf die U-Profile aufgeschweißten C-Profil besteht. In dem nach unten offenen C-Profil sitzen Hakenschrauben zum Befestigen einer Kopfplatte.

Die Maximalbelastung der Zwischenkonstruktion ist in dieser Anordnung weitaus geringer als die Belastbarkeit der Kopfplatte.

Des weiteren ist es aus der DE-OS 28 16 678 bekannt, zwischen der Kopfplatte und der Decke eine Dämpfungseinrichtung vorzusehen. Diese Dämpfungseinrichtung soll verhindern, daß bei einem Erdbeben Schwingungen von der Tragkonstruktion in die Decke eingeleitet werden. Die bekannte Konstruktion weist zu diesem Zweck eine an der Decke zu befestigende zwischenplatte auf, an der als Dämpfungsglieder zwei nach unten weisende Gummimetallteile befestigt sind. An den beiden Gummimetallteilen ist in bekannter Weise die Kopfplatte anzuschrauben.

Die Tragfähigkeit der Kopfplatte ist deutlich größer als die maximal zulässige Zugbelastung der beiden Dämpfungsglieder.

Ausgehend hiervon ist es deswegen Aufgabe der Erfindung, eine Trag- oder Aufhängevorrichtung zu schaffen, die es gestattet, bei kleinen für geringe Lasten ausgelegten Kopfplatten im Bedarfsfalle auch die Maximallasten an die Stiele anzuhängen.

Erfindungsgemäß wird diese Aufgabe durch die Tragoder Aufhängevorrichtung mit den Merkmalen des Anspruches 1 gelöst.

Durch die Verwendung der Adaptereinrichtung, die mit einer Aufnahmeeinrichtung für die Kopfplatte versehen ist, kann mit der kleinen, für geringe Lasten bemessenen Kopfplatte gearbeitet werden. Nur für den Fall, daß größere Lasten am Stiel angehängt werden müssen, wird ein Adapter verwendet, bei dem die Öffnungen für die Befestigungsbolzen einen größeren Abstand aufweisen als die Befestigungsöffnungen in der Kopfplatte. Es wird hierbei davon Gebrauch gemacht, daß die Kopfplatte für sich genommen eine Belastbarkeit aufweist, die größer ist als die Maximalbelastung der verwendeten Dübel, wenn Nachbarschaftseffekte unberücksichtigt bleiben. Lediglich der wegen der Abmessungen der Kopfplatte zu geringe Abstand der BefestigungsÖffnungen wirkt vermindernd hinsichtlich der maximal anzuhängenden Last. Durch die Verwendung der Adaptereinrichtung wird die Last auf Dübel verteilt, die einen solchen Abstand voneinander aufweisen, daß Nachbarschaftseffekte zwischen den Dübeln keinen Einfluß auf die maximale Tragfähigkeit haben.

Für den Regelfall mit geringerer als der maximalen Belastung kann mit den kleineren und leichter zu handhabenden Kopfplatten gearbeitet werden.

Eine besonders kleine und leichte Adaptereinrichtung besteht aus einem Rahmen aus hochkant stehenden Flachprofilen, die auf diese Weise durch die Belastung der Kopfplatte entsprechend ihrem größten Flächenträgheitsmoment auf Biegung beansprucht werden, denn Seitenkräfte an den Stielen senkrecht zu den Auslegern, also in Richtung parallel zu den verlegten Rohren oder Kabeln, treten an den Stielen nahezu nicht auf bzw. sind wesentlich kleiner als die Zugkräfte in den Stielen.

Eine maximale Belastbarkeit der Kopfplatte ergibt sich, wenn die Aufnahmeeinrichtung in der Adaptereinrichtung so gestaltet ist, daß sie an den Längsseiten der Kopfplatte angreift, die gleichzeitig dem Stiel am nächsten benachbart sind. Hierdurch werden die größten Kontaktflächen erhalten.

Wenn an den Querseiten der Adaptereinrichtung Flansche rechtwinklig verlaufend angeformt sind, in denen die Öffnungen für die Schraubenbolzen enthalten sind, können auch bei Verwendung der Adaptereinrichtung dieselben Schraubenlängen eingesetzt werden, die bei der unmittelbaren Anbringung der Kopfplatte Verwendung finden.

Je nach dem, welches Ziel im Vordergrund steht, können die Längs- und die Querseiten des Rahmens zumindest teilweise stoffschlüssig miteinander verbunden sein oder sie können lösbar zusammengesteckt sein. Im einen Falle entfällt ein weiteres Montieren an der Baustelle, dafür ist das Transportvolumen im Falle des vorgefertigten Rahmens größer als bei Versendung der dichter zu packenden, im wesentlichen flachen Einzelteile, die erst an der Baustelle zu dem verhältnismäßig voluminösen Rahmen zusammengesetzt werden.

Bei der steckbaren Ausführungsform sind an den Längsbzw. an den Querseiten Fortsätze ausgebildet, die in entsprechende Öffnungen in den Quer- bzw. den Längsseiten eingesteckt sind. Um die Fortsätze in den Öffnungen zu sichern, können an den Fortsätzen Haken angeformt sein oder die Fortsätze selbst sind in Gestalt von Gewindebolzen ausgeführt, auf denen Befestigungsmuttern aufgeschraubt sind. Schließlich ist es auch möglich, zur Sicherung der Fortsätze in den Öffnungen Vorsteckstifte zu verwenden, die in entsprechende Querbohrungen der Fortsätze eingesetzt sind. In jedem Falle dienen die Sicherungsmittel, wie Haken, Muttern oder Vorsteckstifte nur dem Zusammenhalt des Rahmens solange, bis der Rahmen an der Gebäudestruktur befestigt ist.

Im Falle der Verwendung von Haken besteht die Möglichkeit, zusätzliche, in der anderen Richtung offene Sicherungshaken anzubringen, damit die mit den Flanschen versehenen Querseiten nicht von den Fortsätzen herunterfallen können, wenn das aus dem Rahmen und dem Stiel bestehende zusammengesetzte Gebilde am Stiel angehoben wird, um es an einer Decke zu montieren. Bei der aufrechtstehenden Haltung gleiten die Querseiten in die Sicherungshaken, um so auf den Fortsätzen gehalten zu werden.

Die zusammensetzbare Ausführungsform bietet außerdem die Möglichkeit der nachträglichen Montage bei einem bereits montierten Stiel, wenn, wegen weiterer Installationsmaßnahmen, eine höhere Tragfähigkeit erwünscht ist. Der Rahmen wird um den Stiel herum zusammengesteckt und an der Gebäudestruktur befestigt. In diesem Falle ist zweckmäßigerweise die Aufnahmeeinrichtung von zwei in den beiden Längsseiten enthaltenen Ausnehmungen gebildet, die gegenüber einer Ebene senkrecht zu den flachen Schmalseiten auf derselben Höhe liegen. Die Tiefe der Ausnehmung entspricht etwa der Dicke der Kopfplatte, damit beim Anziehen der Befestigungsschrauben für die Adaptereinrichtung die Kopfplatte an die Gebäudestruktur hingepreßt wird. Wenn die Länge der Ausnehmungen dem Abstand der abgeschrägten Ecken entspricht, erfolgt eine zwangsläufige Zentrierung der Adaptereinrichtung durch die Kopfplatte selbst. Es ist aber auch möglich, bei beengten Platzverhältnissen die Adaptereinrichtung schräg zur Längsachse der Kopfplatte anzusetzen, womit die Kopfplatte mit weiter innenliegenden Bereichen in den Ausnehmungen aufliegt.

Wenn der Stiel von vornherein mit höherer Belastbarkeit montiert werden soll, vereinfacht sich die Montage des aus der Adaptereinrichtung und dem Stiel bestehenden Gebildes, wenn die Kopfplatte des Stieles weitgehend formschlüssig in der Adaptereinrichtung aufgenommen ist. Dies kann beispielsweise dadurch erreicht werden, daß in den beiden Längsseiten parallel und auf gleicher Höhe verlaufende Schlitze enthalten sind, deren Stärke der Dicke der Kopfplatte und deren Länge dem Abstand der abgeschrägten Ecken der Kopfplatte entsprechen. Die Kopfplatte ist in einem solchen Falle allseitig fixiert und kann nicht aus der Adaptereinrichtung freikommen. Hierbei ist es allerdings erforderlich, daß zumindest eine der Längsseiten lösbar mit den übrigen Seiten verbunden ist, damit ein Einsetzen der Kopfplatte möglich wird.

Im Falle eines vollständig vorgefertigten Rahmens kann dasselbe auch erreicht werden, wenn die Schlitze nach oben zu offen sind, so daß endseitig der Schlitze nurmehr Haken übrig bleiben, unter die die Kopfplatte einzuschieben ist.

Schließlich hat die zusammengesteckte Ausführungsform den Vorteil, wahlweise mit nach außen oder nach innen zu ragenden Flanschen montiert zu werden, je nach dem, ob Dübel für M 10 oder M 12 Befestigungsschrauben eingesetzt werden, die unterschiedliche Minimalabstände im Beton erfordern.

In der Zeichnung ist ein Ausführungsbeispiel des Gegenstandes der Erfindung dargestellt. Es zeigen:

Fig. 1      eine Adaptereinrichtung gemäß der Erfindung, bei der der Rahmen aus miteinander verhakten Teilen besteht, in einer perspektivischen Explosionsdarstellung,

Fig. 2      eine Adaptereinrichtung gemäß der Erfindung, bei der der Rahmen aus miteinander verhakten Teilen besteht, zur nachträglichen Montage an einem bereits befestigten Stiel, in einer Seitenansicht,

Fig. 3      die Adaptereinrichtung nach Fig. 2 in einer anderen Montageart gegenüber der Kopfplatte, in einer Ansicht von unten,

Fig. 4 und 5      Adaptereinrichtungen gemäß der Erfindung mit unterschiedlicher Art der lösbaren Verbindung der Seitenteile des Rahmens sowie

Fig. 6      eine Adaptereinrichtung gemäß der Erfindung, bei der die Seitenteile des Rahmens stoffschlüssig miteinander verbunden sind, in einer perspektivischen Darstellung.

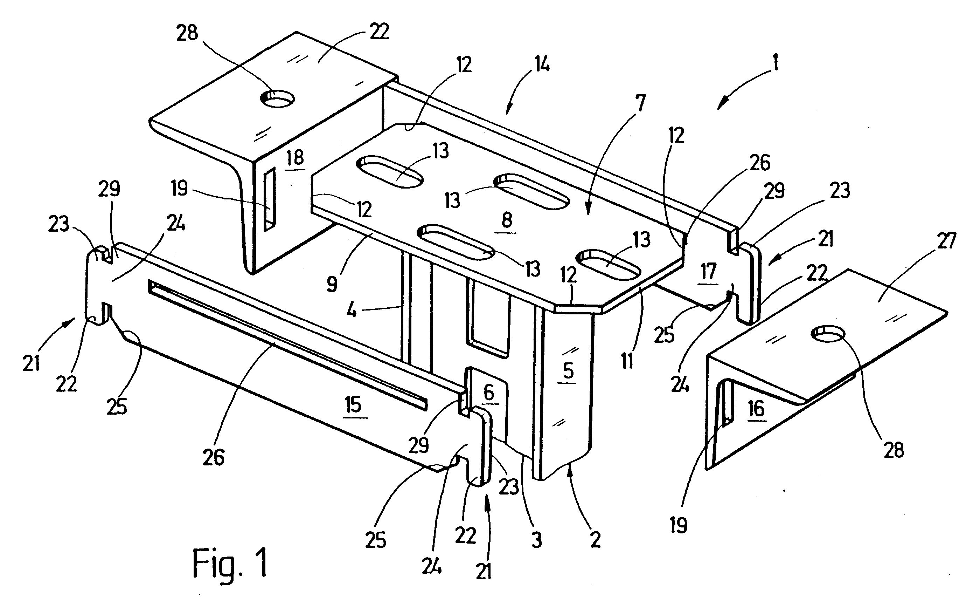

In Fig. 1 ist eine Trag- oder Aufhängevorrichtung 1 für Kabel, Rohrleitungen u.dgl. veranschaulicht, die in einem Gebäude zu installieren sind. Die Trag- oder Aufhängevorrichtung 1 enthält einen stabförmigen, länglichen Stiel 2 in Gestalt eines Doppel-T-Profils mit einem mittleren Steg 3 sowie zwei parallel und mit Abstand rechtwinklig zu dem Steg 3 verlaufenden seitlichen Flanschen 4 und 5. Der abgebrochen veranschaulichte Stiel 2 ist längs seines Steges 3 mit einer Vielzahl äquidistant verteilter Öffnungen 6 versehen, die der formschlüssigen Halterung nicht gezeigterAusleger dienen . Auf diesen Auslegern, die sich im montierten Zustand in der Ebene des Steges 3 erstrecken, liegen die Kabel, Rohre u.dgl. entweder unmittelbar auf oder die Ausleger tragen Pritschen, in die die Kabel eingelegt sind.

An seinem oberen Ende ist der Stiel 2 stoffschlüssig mit einer im wesentlichen rechteckigen Kopfplatte 7 verbunden, die rechtwinklig zu der Längserstreckung des Stieles 2 angeschweißt ist. Die rechteckige Kopfplatte 7, deren Oberseite 8 in der Figur sichtbar ist, weist zwei zueinander parallele, gerade und lange Schmalseiten 9 auf, von denen wegen der perspektivischen Darstellung nur die eine sichtbar ist. Rechtwinklig zu den beiden langen Schmalseiten verlaufen zwei kurze Schmalseiten 11, von denen wegen der Darstellung wiederum nur eine zu erkennen ist. Die langen Schmalseiten 9, die parallel zu der durch den Steg 3 des Stiels 2 definierten Ebene verlaufen, stoßen an vier abgeschrägten Ecken 12 mit den kurzen Schmalseiten 11 zusammen.

Zur unmittelbaren Anbringung des Stiels 2 an einer tragenden Gebäudestruktur ist die Kopfplatte mit mehreren Langlöchern 13 versehen. Die Orientierung der Langlöcher 13 ist parallel zu der langen Schmalseite 9, wobei der Lochabstand der den kurzen Schmalseiten 11 benachbarten Langlocher 13 kleiner ist als der Abstand, den zwei Dübel im Beton haben müssen, wenn sie bis zu ihrer maximalen Belastung belastet werden dürfen.

Um eine höhere Belastbarkeit des Stiels 2 bei unveränderter Gestalt der Kopfplatte 7 zu erzielen, ist eine Adaptereinrichtung 14 vorgesehen, die einen rechteckigen Rahmen aus insgesamt vier hochkant stehenden Flachprofilen 15, 16, 17 und 18 aufweist. Die Flachprofile 15...18 sind jeweils paarweise gleich und im Abstand zueinander parallel verlaufend. So bilden die beiden Flachprofile 15 und 17 die beiden Längsseiten der Adaptereinrichtung 14, während die beiden Flachprofile 16 und 18 die Querseiten darstellen. Die Flachprofile 15...18 sind formschlüssig miteinander verbunden, und zwar so, daß der Abstand zwischen den beiden Flachprofilen 15 und 17 kleiner ist als der Abstand zwischen den langen Schmalseiten 9 der Kopfplatte 7. Die Hochachse des Querschnittes der Flachprofile 15...18 erstreckt sich parallel zu dem Stiel 2.

Da die Flachprofile 15...18 paarweise untereinander gleich sind, genügt es, im Folgenden den Aufbau des die eine Längsseite bildenden Flachprofiles 15 sowie des eine Querseite bildenden Flachprofiles 16 zu beschreiben. Die Erläuterungen gelten sinngemäß für die anderen beiden Flachprofile 17 und 18.

Entsprechend dem Abstand, den die beiden Flachprofile 15 und 17 voneinander haben, sind in dem Flachprofil 16 zwei längliche, vertikal verlaufende Öffnungen 19 enthalten, deren Weite der Dicke des Flachprofiles 15 entspricht und deren Höhe in der aus der folgenden Beschreibung sich ergebenden Dimensionierung eines eingesteckten Fortsatzes ergibt. Das im wesentlichen rechteckige Flachprofil 15 trägt sowohl an seinem dem Flachprofil 16 als auch an seinem dem Flachprofil 18 benachbarten Ende jeweils einen Fortsatz 21, der sich in Verlängerung des Flachprofiles 15 erstreckt. Am Ende des Fortsatzes 21 ragt eine Nase 22 nach unten und eine weitere Nase 23 nach oben, und zwar in einem Abstand von dem Ende des Flachprofiles 15, der der Dicke der Flachprofile 16 bzw. 18 entspricht. Hierdurch entsteht zwischen den Nasen 22 und 23 an dem Fortsatz 21 eine Art Hals 24, dessen Länge geringfügig größer ist als die Dicke des Flachprofiles 16. Die Höhe des entstehenden Halses 24 ist so bemessen, daß wenn die untere Nase 22 durch die entsprechende Öffnung 19 in dem querverlaufenden Flachprofil 16 eingesteckt wird, ohne weiteres auch die obere Nase 23 durch die Öffnung, 19 hindurchgeführt werden kann. Umgekehrt kann die Nase 22 jedoch nicht aus der Öffnung 19 herausgezogen werden, wenn das Flachprofil 16 mit dem oberen Rand seiner Öffnung 19 auf dem Hals 24 aufliegt. Es entsteht mit Hilfe der Nasen 22 und 23 jeweils eine Verhakung, die die beiden Teile 15 und 16 formschlüssig zusammenhält.

Um das Einhaken des in Längsrichtung des Rahmens verlaufenden Flachprofiles in das quer verlaufende Flachprofil 16 zu erleichtern, kann gegenüber der unteren Nase 22 jeweils noch eine Abschrägung 25 vorgesehen sein, um genügend Luft zum Einhängen der Nase 22 zu bekommen, ohne daß der Hals 24 unnötig lang zu sein braucht.

Zur Aufnahme der Kopfplatte 7 in der Adaptereinrichtung 14 ist in jedem in Längsrichtung verlaufenden Flachprofil 15 bzw. 17 jeweils ein Längsschlitz 26 enthalten, dessen Erstreckung in vertikaler Richtung der Dicke der Kopfplatte 7 entspricht und dessen Länge geringfügig größer als die Länge der langen Schmalseiten 9 der Kopfplatte zwischen den abgeschrägten Ecken 12 ist. In jedem Falle sind die beiden Schlitze 26 kürzer als der Abstand zwischen den kurzen Schmalseiten 11.

Um die Adaptereinrichtung 14 an der Betonstruktur zu befestigen, sind an die kurzen Flachprofile 16 und 18 jeweils rechtwinklig verlaufende Flansche 27 an deren oberer Kante einstückig angeformt, die Bohrungen 28 für Befestigungsschrauben enthalten. Im zusammengesetzten Zustand der Adaptereinrichtung 14 entspricht der Abstand zwischen den Löchern 28 dem Mindestabstand, den Dübel entsprechender Größe im Beton voneinander aufweisen müssen, wenn sie bis zu ihrer maximalen Tragfähigkeit belastet werden, ohne daß es zu einer Belastungsverminderung kommt, weil sich die Kräftefelder der beiden Dübel in der Betonstruktur theoretisch überschneiden.

Die Montage der vorbeschriebenen Tragvorrichtung geschieht wie folgt: Es werden zunächst in eines der beiden querverlaufenden Flachprofile, beispielsweise das Flachprofil 18, die beiden in Längsrichtung verlaufenden Flachprofile 15 und 17 mit ihren entsprechenden Enden in die beiden parallel mit Abstand zueinander verlaufenden Öffnungen 19 eingehängt, indem zunächst die untere Nase 22 durch die Öffnung 19 hindurchgesteckt wird. Sodann wird das Flachprofil 15 bzw. 17 aufgerichtet, bis es mit seiner Stirnseite 29, die im Abstand zu der Nase 23 verläuft, an der schmalen Innenseite des Flachprofiles 18 anstößt. Da die Öffnungen 19 seitlich geringfügig weiter sind als es der Dicke der Flachprofile 15 und 17 entspricht, können sie an ihrem noch nicht eingehängten Ende voneinander entfernt werden, so weit nämlich, damit in Längsrichtung der beiden Flachprofile 15 und 17 die Kopfplatte 7 des Stiels 2 in Richtung parallel zur Längserstrekkung der langen Schmalseite 9 eingeschoben werden kann. Hierbei kommen die längs verlaufenden Schmalseiten 9 in den Schlitzen 26 zu liegen. Sobald die Kopfplatte 7 so weit eingeschoben ist, bis ihre abgeschrägten Ecken 12 am Ende der beiden Schlitze 26 anstoßen, werden die beiden Flachprofile 15, 17 an ihren freien Enden parallel zueinander ausgerichtet und bekommen einen Abstand, der dem Abstand der Löcher 19 in dem Flachprofil 16 entspricht. Es können jetzt die Nasen 22 der dem Flachprofil 16 benachbarten Enden der Flachprofile 15 und 17 durch die entsprechenden Öffnungen 19 eingesteckt werden und das Flachprofil 16 bis zur Anlage an der Stirnseite 29 hochgeklappt werden. Die Adaptereinrichtung 14 ist hierdurch mit der Kopfplatte 7 formschlüssig verbunden. Weil die Schlitze 26 kürzer sind als es der Länge der Kopfplatte 7 entspricht, ist es auch nicht möglich, durch seitliches Verschieben der Kopfplatte 7 eine der in Längsrichtung verlaufenden Schmalseiten 9 aus dem Schlitz 26 freizubekommen, da, noch bevor die Schmalseite 9 aus dem Schlitz 26 herausgleiten kann, die gegenüberliegenden abgeschrägten Ecken 12 an die Ränder des Schlitzes 26 anstoßeß, um ein weiteres Verschieben zu verhindern.

Selbst wenn die querverlaufenden Flachprofile 16 und 18 längs der Öffnungen 19 nach unten gleiten, wenn die montierte Einheit an dem Stiel 12 senkrecht gehalten wird, können sie von den Fortsätzen 21 der Flachprofile 15 und 17 nicht freikommen, da sie in den von den Nasen 23 gebildeten, nach oben offenen Haken festgehalten werden.

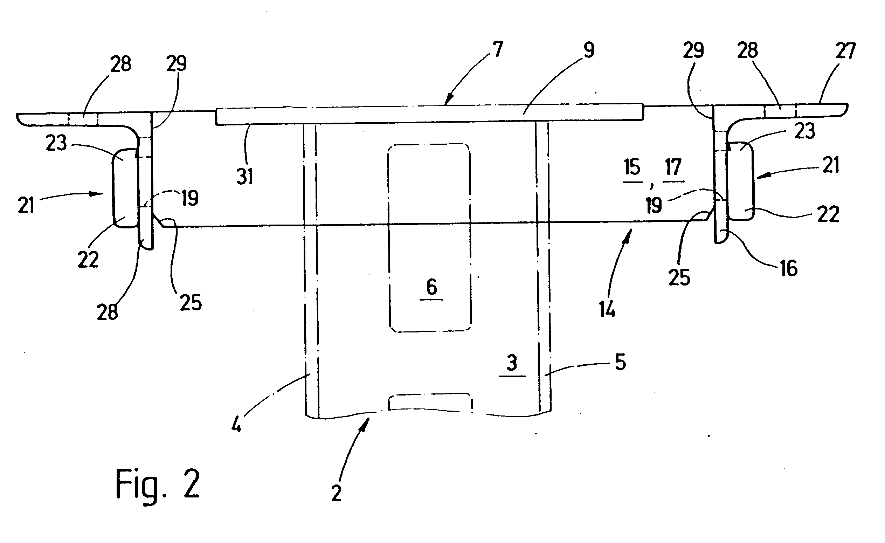

Fig. 2 zeigt ein Ausführungsbeispiel der Adaptereinrichtung 14, das dazu geeignet ist, nachträglich an einem bereits montierten Stiel 2 angebracht zu werden. Der Stiel 2 hat hierbei denselben Aufbau wie der nach Fig. 1 und auch die Adaptereinrichtung 14 ist mit Ausnahme des nachfolgend beschriebenen Unterschiedes in der gleichen Weise gestaltet wie bei Fig. 1.

Der einzige Unterschied besteht darin, daß die Aufnahmeeinrichtung für die Kopfplatte 7 von einer in jeder der beiden längs verlaufenden Flachprofile 15 bzw. 17 eingearbeiteten Ausnehmung 31 gebildet ist. Die beiden parallel zueinander verlaufenden Ausnehmungen 31 haben dieselben Abmessungen wie die Schlitze 26, befinden sich jedoch nicht innerhalb des Flachprofiles 15 bzw. 17, sondern an der oberen Kante, die auf der Höhe der seitlich verlaufenden Flansche 27 liegt; sie sind entgegen der Richtung des Stieles 2 zu offen.

Die Anwendung der Adaptereinrichtung 14 nach Fig. 2 geschieht in der Weise, daß zunächst die beiden in Längsrichtung verlaufenden Flachprofile 15 und 17 in eines der querverlaufenden Flachprofile 16 bzw. 18 eingesteckt und dort verhakt wird. Das hierdurch entstehende gabelförmige Gebilde wird von der Seite her über den montierten Stiel 2 geschoben. Die beiden Flachprofile 15 und 17 laufen damit an dem Stiel 2 vorbei.

Anschließend wird das andere querverlaufende Flachprofil 16 bzw. 18, wie vorher beschrieben, auf die zunächst noch freien Enden der Flachprofile 15 und 17 aufgeschoben, um den in sich geschlossenen viereckförmigen Rahmen zu schließen. Jetzt kann die geschlossene Adaptereinrichtung 14 an der Gebäudestruktur angeschraubt werden und sie unterstützt die Kopfplatte 7 des Stieles 2, indem sie diese gegen die Gebäudestruktur anpreßt.

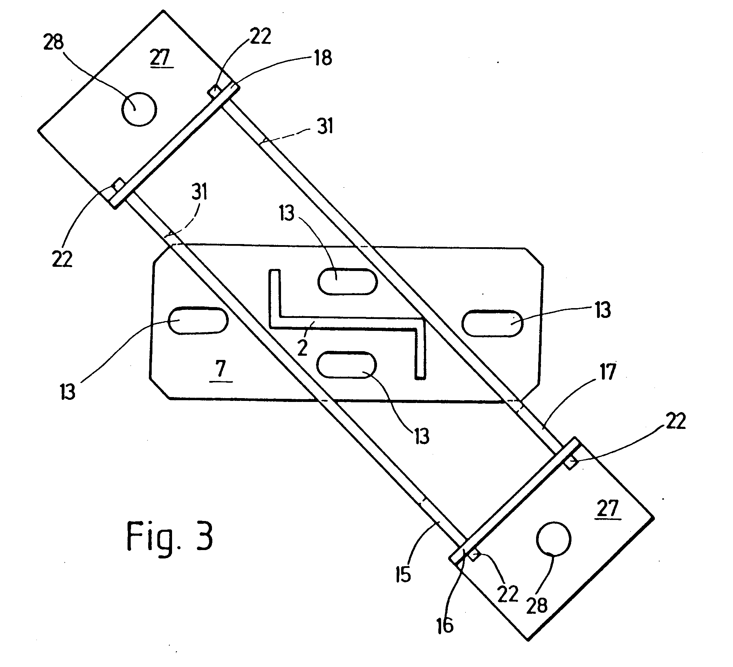

Wenn die Platzverhältnisse beengt sind, kann die Adaptereinrichtung 14 nach Fig. 2 auch in der in Fig. 3 gezeigten Weise montiert werden, indem nämlich ihre beiden längsverlaufenden längeren Flachprofile 15 und 17 nicht parallel, sondern schräg zu der Längserstreckung der Kopfplatte 7 angeordnet sind. In jedem Falle liegt die Kopfplatte 7 entweder mit ihren den beiden langen Schmalseiten 9 benachbarten Bereichen in den Ausnehmungen 31 oder sie liegt mit dem Stiel 2 dichter benachbarten Teilen auf den längsverlaufenden Flachprofilen 15, 17 auf.

Im übrigen unterscheidet sich die Anordnung nach Fig. 3 von den vorherigen Anordnungen nur noch dadurch, daß der Stiel 2 nicht ein I-Profil, sondern ein Z-Profil hat.

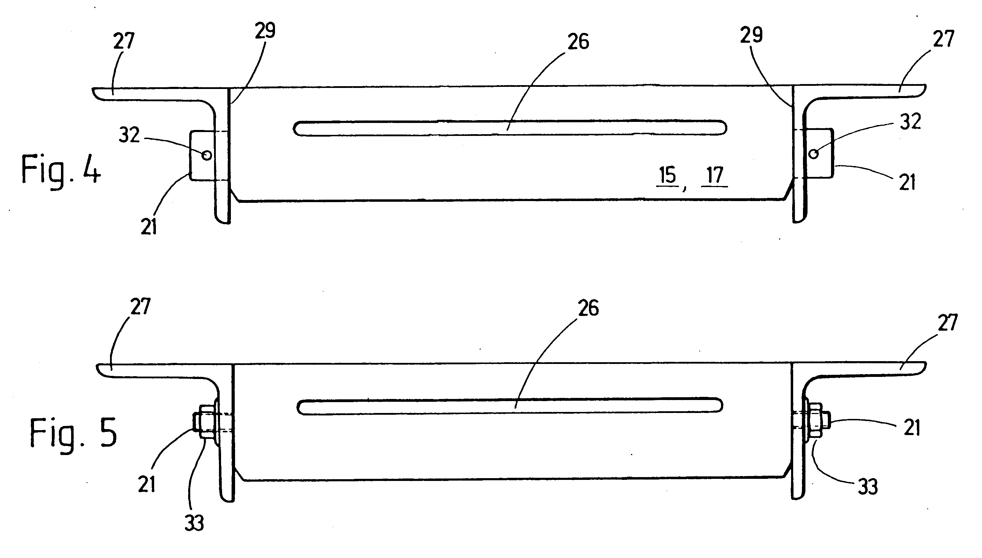

Die lösbare Verbindung zwischen den Flachseiten 15 und 17 einerseits mit den Flachprofilen 16 und 18 andererseits kann anstelle der Haken auch mit anderen Mitteln erreicht werden, wie dies die Fig. 4 und 5 zeigen. Gemäß Fig. 4 enthalten die beiden in Längsrichtung der Flachprofile 15 bzw. 17 verlaufenden Fortsätze 21 an ihrem über die Außenseite des Flachprofiles 16 bzw. 18 hinausragenden Ende Querbohrungen 32, in die nach dem Zusammenfügen der Teile Vorsteckstifte oder Splinte eingesteckt werden. Ansonsten liegt auch hier wieder die flache nach innen weisende Seite der Flachprofile 16 und 18 an den planen Stirnflächen 29 der in Längsrichtung verlaufenden Flachprofile 15, 17 an. Die Öffnungen 19, durch die die Fortsätze 21 hindurchführen, können dementsprechend weniger Höhenspiel für die Fortsätze 21 haben, da ein Verkanten der Fortsätze in den Öffnungen zur Montage nicht notwendig ist.

Gemäß Fig. 5) sind die Fortsätze 21 als Gewindebolzen ausgebildet, die durch die Öffnungen 19 hindurchführen, die in ihrem Querschnitt nun an deren Gestalt angepaßt sind. Auf den auf den querverlaufenden Flachprofilen 16 und 18 herausragenden Abschnitt der Gewindebolzen sind zur Sicherung Gewindemuttern 33 aufgeschraubt.

Es ist ohne weiteres einleuchtend, daß die zu

sammensteckbare Adaptereinrichtung 14 auch dadurch erhalten werden kann, daß die Fortsätze 21 nicht an den in Längsrichtung des Rahmens verlaufenden Flachprofilen 15, 17, sondern an den querverlaufenden Flachprofilen 16, 18 angeformt und die Öffnungen 19 dementsprechend in den längsverlaufenden Flachprofilen 15, 17 enthalten sind. Dies gilt für alle Ausführungen der lösbaren formschlüssigen Verbindung der Flachprofile 15...18.

Die querverlaufenden Flachprofile 16 und 18 lassen sich auch mit nach innen weisenden Flanschen 27 montieren, wenn die oberen Kanten der Flachprofile 16 und 18 ein entsprechendes Stück gegenüber den Flanschen 27 zurückspringen. Dadurch läßt sich ein unterschiedlicher Abstand der Löcher 28 erreichen, je nachdem, wie groß der geforderte Minimalabstand ist.

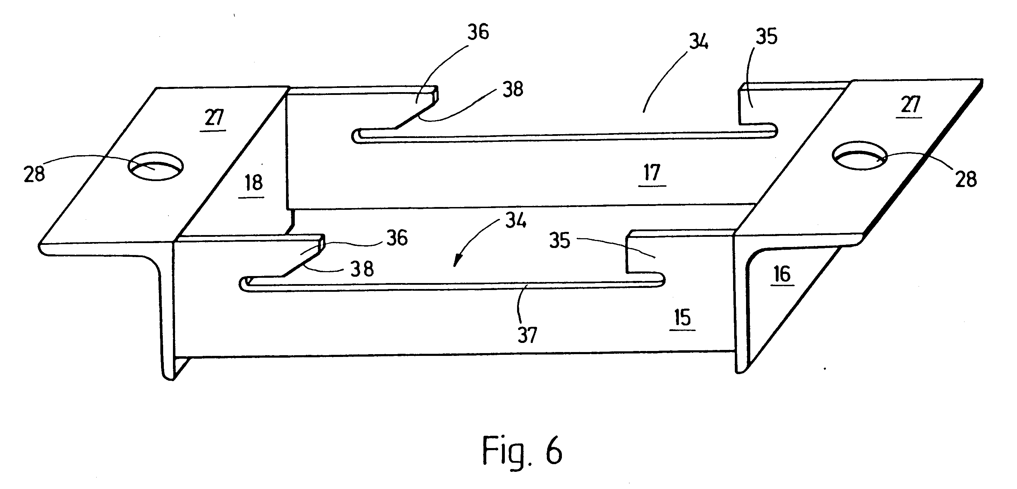

In Fig. 6 ist eine Adaptereinrichtung 14 gezeigt, bei der die Flachprofile 15...18 an den Ecken stoffschlüssig, beispielsweise durch Schweißen, starr miteinander verbunden sind. Die Aufnahmeeinrichtung für die Kopfplatte 7 sind bei Fig. 6 verhältnismäßig tief ausgeführte, nach oben zu offene Ausnehmungen 34, die in den in Längsrichtung des Rahmens verlaufenden Flachprofilen 15 und 17 eingearbeitet sind. Damit die Kopfplatte 7 nach oben zu nicht freikommen kann, ragen von den Enden der beiden Ausnehmungen 34 her jeweils Nasen oder Fortsätze 35 und 36 aufeinander zu, wobei diese Nasen von dem Grund 37 der Ausnehmung 34 einen Abstand haben, der der Dicke der Kopfplatte 7 entspricht. Außerdem ist die Nase 36 nach unten zu geringfügig abgeschrägt, um das Einsetzen der Kopfplatte 7 zu erleichtern.

Zur Montage wird zunächst der Stiel 2 durch die von den Flachprofilen 15...18 begrenzte Öffnung hindurchgesteckt und schließlich seitlich geringfügig verkantet, damit die Kopfplatte 7 unter die mit der Abschrägung 38 versehenen Nasen 36 eingeführt werden kann. Durch Vorschieben der Kopfplatte 7 in die von den Nasen 36 und dem Grund der Ausnehmung 37 begrenzte Ausbuchtung kann auch die andere kurze Schmalseite 11 der Kopfplatte mit den abgeschrägten Ecken 11 an den Nasen 36 vorbeigelangen, so daß die Kopfplatte 7 mit ihrer Unterseite im Bereich der in Längsrichtung verlaufenden Schmalseiten 9 auf dem Grund 37 der Ausnehmung 34 aufliegt.

Ein seitliches Herausschieben der Kopfplatte 7 aus den Ausnehmungen 34 ist nicht möglich, weil die in Längsrichtung der Ausnehmung 34 gelegenen Ränder einen kürzeren Abstand voneinander aufweisen als der Abstand der kurzen Schmalseiten 11.

**Patentansprüche**

1.    Trag- oder Aufhängevorrichtung (1) für Kabel, Rohrleitungen od.dgl., mit stabförmigen Stielen (2), die zur Verbindung mit angefügten Trag- und/oder Befestigungseinrichtungen für die Kabel oder Rohrleitungen oder für diese unterstützende oder aufnehmende Pritschen, Rinnen usw. eingerichtet sind und endseitig jeweils eine rechtwinklig zu der Längsachse des Stieles (2) verlaufende, im wesentlichen rechteckige Kopfplatte (7) mit abgeschrägten Ecken (12) tragen, die zumindest zwei parallel zueinander verlaufende gerade lange Schmalseiten (9) aufweist, wobei der Stiel (2) mittels der Kopfplatte (7) an einer Decken- oder Gebäudewand zu befestigen ist, dadurch gekennzeichnet, daß eine Adaptereinrichtung (14) vorgesehen ist, die eine Aufnahmeeinrichtung (26, 31, 34) für die Kopfplatte (7) aufweist und die mit Öffnungen (28) für in der Gebäudedecke oder Gebäudewand zu verankernde Bolzen versehen ist und daß der Abstand zwischen den Öffnungen (28) gleich oder größer als der zulässige Mindestabstand zwischen benachbarten Dübeln ist, die bis zu ihrer maximal möglichen Gesamttragfähigkeit zu belasten sind, und daß die Adaptereinrichtung (14) mit hochkant stehenden Flachprofilen (15...18) versehen ist.

2. Vorrichtung nach Anspruch 1, dadurch gekennzeichnet, daß die hochkant stehenden Flachprofile (15...18) einen rechteckigen Rahmen bilden und daß ein Paar der hochkant stehenden Flachprofile (15...18) Längsseiten (15, 17) und das andere Paar Querseiten (16, 18) des Rahmens bilden und daß die Längsseiten (15, 17) länger sind als die Querseiten (16, 18).

3. Vorrichtung nach Anspruch 1, dadurch gekennzeichnet, daß die Aufnahmeeinrichtung (26, 31, 34) mit dem langen Schmalseiten (9) der Kopfplatte (7) zusammenwirkt.

4. Vorrichtung nach Anspruch 2, dadurch gekennzeichnet, daß die Aufnahmeeinrichtung (26,31,34) für die Kopfplatte ( 7) in den beiden Längsseiten (15, 17) angeordnet ist.

5. Vorrichtung nach Anspruch 2, dadurch gekennzeichnet, daß an die Querseiten (16, 18) rechtwinklig zu den Querseiten (16, 18) verlaufende Flansche (27) angeformt sind, in denen die Öffnungen (28) für die Schraubenbolzen enthalten sind.

6. Vorrichtung nach Anspruch 2, dadurch gekennzeichnet, daß der Abstand der beiden Längsseiten (15, 17) des Rahmens kleiner ist als der Abstand der langen Schmalseiten (9) der Kopfplatte (7).

7. Vorrichtung nach Anspruch 2, dadurch gekennzeichnet, daß die in derselben Richtung weisenden Kanten der Längsseiten (15, 17) der Adaptereinrichtung (14) in einer Ebene liegen.

8. Vorrichtung nach Anspruch 7, dadurch gekennzeichnet, daß die Flansche (27) der Querseiten (16, 18) über die Ebene hinausstehen.

9. Vorrichtung nach Anspruch 7, dadurch gekennzeichnet, daß die Flansche (27) der Querseiten (16, 18) gegenüber der Ebene zurückspringen.

10. Vorrichtung nach Anspruch 2, dadurch gekennzeichnet, daß zumindest eine Querseite (16, 18) mit einer Längsseite (15, 17) stoffschlüssig verbunden ist.

11. Vorrichtung nach Anspruch 10, dadurch gekennzeichnet, daß bei dem Rahmen (14) jeweils eine Längsund eine Querseite (15...18) an diagonal gegenüberliegenden Ecken stoffschlüssig verbunden sind, und die beiden anderen Ecken formschlüssig miteinander verbunden sind.

12. Vorrichtung nach Anspruch 2, dadurch gekennzeichnet, daß die Längs- und die Querseiten (15...18) formschlüssig lösbar miteinander verbunden sind.

13. Vorrichtung nach Anspruch 12, dadurch gekennzeichnet, daß an den Längsseiten (15, 17) oder den Querseiten (16, 18) in deren Verlängerung verlaufende Fortsätze (21) angeformt sind, die in Öffnungen (19) in den Querseiten (16, 18) oder den Längsseiten (15, 17) eingesteckt sind, und daß der Querschnitt der Öffnungen (19) an das Profil der Fortsätze (21) angepaßt ist.

14. Vorrichtung nach den Ansprüchen 5 und 13, dadurch gekennzeichnet, daß an den Fortsätzen (21) Haken (22) vorgesehen sind, die von den Flanschen (17) wegweisen und die Querseite oder die Längsseite (15...18) auf der außenliegenden, von der Längsseite oder der Querseite (15...18) abliegenden Seite greifen und daß die Haken (22) in Richtung von den Flanschen (27) weg offen sind.

15. Vorrichtung nach Anspruch 14, dadurch gekennzeichnet, daß an den Fortsätzen (21) weitere Haken (23) ausgebildet sind, die, bezogen auf die ersten Haken (22), in der entgegengesetzten Richtung und damit in Richtung zu dem Flansch (27) hin offen Sind und als Sicherungshaken dienen.

16. Vorrichtung nach Anspruch 13, dadurch gekennzeichnet, daß die Fortsätze (21) Querbohrungen (32) zur Aufnahme von Vorsteckstiften enthalten.

17. Vorrichtung nach Anspruch 13, dadurch gekennzeichnet, daß die Fortsätze (21) von Schraubenbolzen gebildet sind, auf die Befestigungsmuttern (33) zum Sichern der Fortsätze (21) aufgeschraubt sind.

18. Vorrichtung nach Anspruch 1, dadurch gekennzeichnet, daß die Aufnahmeeinrichtung für die Kopfplatte (7) von zwei Ausnehmungen (31, 34) gebildet ist, von denen je eine in einer Längsseite (15, 17) enthalten ist und die in der dem Stiel (2) entgegengesetzten Richtung offen sind.

19. Vorrichtung nach Anspruch 18, dadurch gekennzeichnet, daß die Tiefe der Ausnehmung (31) im wesentlichen der Stärke der Kopfplatte (7) in der Nähe ihrer langen Schmalseiten (9) entspricht.

20. Vorrichtung nach Anspruch 18, dadurch gekennzeichnet, daß die Länge der Ausnehmung (31, 34) dem Abstand der Abschrägungen (12) an der (7), gemessen parallel zu der langen Schmalseite (9) entspricht.

21. Vorrichtung nach Anspruch 1, dadurch gekennzeichnet, daß die Aufnahmeeinrichtung von zwei in den beiden Längsseiten (15, 17) enthaltenen länglichen Schlitzen (26) gebildet ist, die in einer gemeinsamen Ebene liegen und deren Höhe der Stärke der Kopfplatte (7) in der Nähe der langen Schmalseite (9) der Kopfplatte (7) entsprechen, und daß die Länge der Schlitze (26) dem Abstand der abgeschrägten Ecken (12) der Kopfplatte (7), gemessen in Richtung parallel zu der langen Schmalseite (9) entspricht.

22. Vorrichtung nach Anspruch 21, dadurch gekennzeichnet, daß die Ausnehmungen (34) unter Ausbildung zweier endseitig gelegener Haken (35, 36) in der dem Stiel (2) entgegengesetzten Richtung offen sind.

23. Vorrichtung nach Anspruch 2, dadurch gekennzeichnet, daß der Abstand der Querselten (16, 18) voneinander größer ist als die Längserstreckung der Kopfplatte (7).

24. Vorrichtung nach den Ansprüchen 5 und 12, dadurch gekennzeichnet, daß die den Flanschen (27) benachbarten Kanten der Längsseiten (15, 17) gegenüber den Flanschen (27) zurückspringen.

**Claims**

1. Carrier and hanging device (1) for cables, pipes or the like, comprising rod-shaped bars (2) arranged for connection to attached carrier and/or mounting devices for the cables or pipes or their supporting and receiving platforms, channels etc., having at the end a respective substantially rectangular head plate (7), which extends rectangularly relative to the longitudinal axis of the bar (2) and which has slanted corners (12) and at least two straight long narrow sides (9) extending parallel with each other, in which respect the bar (2) is to be mounted to a ceiling or building wall by means of the head plate (7), **characterised in that** an adapter arrangement (14) is provided, comprising a receiving means (26, 31, 34) for the head plate (7) and openings (28) for the bolts to be anchored in the ceiling or wall of the building, and that the distance between the openings (28) is equal to, or greater than the admissible minimum distance between adjacent rawl plugs which are to be loaded up to their maximum load capacity, and that the adapter arrangement (14) is provided with flat profiles (15...18) standing on edge.

2. Device according to claim 1, **characterised in that** the flat profiles standing on edge (15...18) form a rectangular frame, and that a pair of the flat profiles standing on edge (15. .18) forms longitudinal sides (15, 17), and the other pair forms cross sides (16, 18) of the frame, and that the longitundinal sides (15, 17) are longer than the cross sides (16, 18).

3. Device according to claim 1, **characterised in that** the receiving means (26, 31, 34) co-acts with the long narrow sides (9) of the head plate (7).

4. Device according to claim 2, **characterised in that** the receiving means (26, 31, 34) for the head plate (7) is arranged in the two longitudinal sides (15, 17).

5. Device according to claim 2, **characterised in that** flanges (27), which extend rectangularly to the cross sides (16, 18) and which comprise openings (28) for the threaded bolts, are formed on the cross sides (16, 18).

6. Device according to claim 2, **characterised in that** the distance between the two longitudinal sides (15, 17) of the frame is shorter than the distance of the long narrow sides (9) of the head plate (7).

7. Device according to claim 2, **characterised in that** the edges, which are oriented in the same direction, of the longitudinal sides (15, 17) of the adapter means (14) are placed in one plane.

8. Device according to claim 7, **characterised in that** the flanges (27) of the cross sides (16, 18) protrude over the plane.

9. Device according to claim 7, **characterised in that** the flanges (27) of the cross sides (16, 18) retract relative to the plane.

10. Device according to claim 2, **characterised in that** at least one cross side (16, 18) is permanently joined with a longitudinal side (15,17).

11. Device according to claim 10, **characterised in that** on the frame (14) a respective longitudinal and a cross side (15...18) are permanently joined on diagonally opposite corners, and that the other two corners are interconnected with each other.

12. Device according to claim 2, **characterised in that** the longitudinal and cross sides (15...18) are detachably interconnected with each other.

13. Device according to claim 12, **characterised in that** extensions (21) within the longitudinal sides (15, 17) or within the cross sides (16, 18) are formed thereon and inserted into openings (19) in the cross sides (16, 18) or in the longitudinal sides (15, 17), and that the cross-section of the openings (19) is matched with the profile of the extensions (21).

14. Device according to claims 5 and 13, **characterised in that** the extensions (21) are provided with hooks (22), which face away from the flanges (17) and grip the cross side or the longitudinal side (15...18) on the side located externally and placed away from the longitudinal side or the cross side (15...18), and that the hooks (22) are open in the direction away from the flanges (27).

15. Device according to claim 14, **characterised in that** the extensions (21) have further hooks (23) formed thereon, which are open in the opposite direction relative to the first hooks (22), and are thus open in the direction towards the flange (27), serving as safety hooks.

16. Device according to claim 13, **characterised in that** the extensions (21) include cross bores (32) for receiving temporary locking pins.

17. Device according to claim 13, **characterised in that** the extensions (21) are formed by threaded bolts onto which are screwed mounting nuts (33) to secure the extensions (21).

18. Device according to claim 1, **characterised in that** the receiving means for the head plate (7) is formed by two cut-outs (31, 34), one of which being placed in a longitudinal side (15, 17) and open in the direction opposite the bar (2).

19. Device according to claim 18, **characterised in that** the depth of the cut-out (31) substantially corresponds with the thickness of the head plate (7) near its long narrow sides (9).

20. Device according to claim 18, **characterised in that** the length of the cut-out (31, 34) corresponds with the distance of the slants (12) on (7), measured parallel to the long narrow side (9).

21. Device according to claim 1, **characterised in that** the receiving means is formed by two oblong slots (26) in the two longitudinal sides (15, 17), which slots are in a common plane and the heights of which corresponds with the thickness of the head plate (7) near the long narrow side (9) of the head plate (7), and that the length of the slots (26) corresponds with the distance of the slanted corners (12) of the head plate (7), measured in the direction parallel with the long narrow side (9).

22. Device according to claim 21, **characterised in that** the cut-outs (34) are open in the direction opposite to the bar whilst forming two hooks. (35, 36) located at the end.

23. Device according to claim 2, **characterised in that** the distance between the cross sides (16, 10) is greater than the longitudinal extent of the head plate (7).

24. Device according to claims 5 and 12, **characterised in that** the longitudinal sides (15, 17) adjacent the flanges (27) retract relative to the flanges (27).

**Revendications**

1. Dispositif de support ou de suspension (1) pour des câbles, des tuyauteries ou analogues comportant des mâts (2) en forme de barres qui sont agencés en vue de leur liaison avec des dispositifs de support et/ou de fixation associés pour les câbles ou tuyauteries ou pour des tablettes, des goulottes, etc... supportant ou recevant ceux-ci et qui comportent chacun à leur extrémité une semelle (7) essentiellement rectangulaire dont les angles (12) sont chanfreinés qui est perpendiculaire à l'axe longitudinal du mât (2) et qui présente au moins deux côtés étroits (9) rectilignes allongés, parallèles entre eux, le mât (2) étant fixé au moyen de la semelle (7) sur un plafond ou sur un mur, caractérisé en ce qu'il est prévu un dispositif d'adaptation (14) qui comporte un dispositif de réception (26, 31, 34) de la semelle (7) et est muni d'ouvertures (28) pour le passage de vis ancrées dans le plafond ou dans le mur du bâtiment et en ce que la distance entre les ouvertures (28) est égale ou supérieure à la distance minimale admissible entre des chevilles voisines qui doivent supporter la charge totale maximale admissible et en ce que le dispositif d'adaptation (14) est muni de profilés plats (15...18) placés sur chants.

2. Dispositif selon la revendication 1, caractérisé en ce que les profilés placés sur chant (15...18) forment un cadre rectangulaire et en ce qu'une paire des profilés plats placés sur chant (15...18) forme les grands côtés (15, 17) et l'autre paire forme les petits côtés (16, 18) du cadre et en ce que les grands côtés (15, 17) ont une longueur supérieure aux petits côtés (16, 18).

3. Dispositif selon la revendication 1, caractérisé en ce que le dispositif de réception (26, 31, 34) coopère avec les côtés étroits allongés (9) de la semelle (7).

4. Dispositif selon la revendication 2, caractérisé en ce que le dispositif de réception (26, 31, 34) de la semelle (7) est aménagé dans les deux grands côtés (15, 17).

5. Dispositif selon la revendication 2, caractérisé en ce que des brides (27) qui comportent les ouvertures (28) pour les vis sont formées sur les petits côtés (16, 18), perpendiculairement aux petits côtés (16, 18).

6. Dispositif selon la revendication 2, caractérisé en ce que la distance entre les deux grands côtés (15, 17) du cadre est inférieure à la distance entre les deux côtés étroits allongés (9) de la semelle (7).

7. Dispositif selon la revendication 2, caractérisé en ce que les bords orientés dans la même direction des grands côtés (15, 17) du dispositif d'adaptation (14) sont situés dans un plan.

8. Dispositif selon la revendication 7, caractérisé en ce que les brides (27) des petits côtés (16, 18) sont en saillie par rapport au plan.

9. Dispositif selon la revendication 7, caractérisé en ce que les brides (27) des petits côtés (16, 18) sont en retrait par rapport au plan.

10. Dispositif selon la revendication 2, caractérisé en ce qu'un petit côté (16, 18) au moins est lié par apport de matière à un grand côté (15, 17).

11. Dispositif selon la revendication 10, caractérisé en ce que respectivement un grand côté et un petit côté (15...18) du cadre (14) sont reliés entre eux par apport de matière dans des angles diagonalement opposés et les deux autres angles sont reliés entre eux par conjugaison de forme.

12. Dispositif selon la revendication 2, caractérisé en ce que les grands côtés et les petits côtés (15...18) sont reliés entre eux de manière démontable par conjugaison de forme.

13. Dispositif selon la revendication 12, caractérisé en ce que les grands côtés (15, 17) ou les petits côtés (16, 18) comportent des prolongements (21) qui s'engagent dans des ouvertures (19) dans les petits côtés (16, 18) ou dans les grands côtés (15, 17) et en ce que la section des ouvertures (19) est adaptée au profil des prolongements (21).

14. Dispositif selon les revendication 5 et 13, caractérisé en ce que les prolongements (21) sont munis de crochets (22) qui sont orientés dans la direction opposée aux brides (17) et saisissent le petit côté ou le grand côté (15...18) sur sa face extérieure éloignée du grand dans la direction opposée aux brides (27).

15. Dispositif selon la revendication 14, caractérisé en ce que les prolongements (21) comportent des crochets supplémentaires (23) qui, par rapport aux premiers crochets (22), sont ouverts dans la direction opposée, donc dans la direction de la bride (27), et servent de crochets de sécurité.

16. Dispositif selon la revendication 13, caractérisé en ce que les prolongements (21) sont munis de perçages transversaux (32) recevant des goupilles.

17. Dispositif selon la revendication 13, caractérisé en ce que les prolongements (21) sont formés par des boulons sur lesquels sont vissés des écrous (33) en vue de bloquer les prolongements (21).

18. Dispositif selon la revendication 1, caractérisé en ce que le dispositif de réception de la semelle (7) est formé de deux évidements (31, 34) qui sont formés chacun dans un grand côté (15, 17) et qui sont ouverts dans la direction opposée au mât (2).

19. Dispositif selon la revendication 18, caractérisé en ce que la profondeur de l'évidement (31) correspond essentiellement à l'épaisseur de la semelle (7) au voisinage des côtés étroits allongés (9) de celle-ci.

20. Dispositif selon la revendication 18, caractérisé en ce que la longueur de l'évidement (31, 34) correspond à la distance entre les chanfreins (12) de la semelle (7), mesurée parallèlement au côté étroit allongé (9).

21. Dispositif selon la revendication 1, caractérisé en ce que le dispositif de réception est formé de deux fentes allongées (26) qui sont aménagées dans les deux grands côtés (15, 17), qui sont situées dans un plan commun et dont la hauteur correspond à l'épaisseur de la semelle (7) au voisinage des côtés étroits allongés (9) de celle-ci et en ce que la longueur des fentes (26) correspond à la distance entre les chanfreins (12) de la semelle (7), mesurée parallèlement au côté étroit allongé (9).

22. Dispositif selon la revendication 21, caractérisé en ce que les évidements (34) sont ouverts dans la direction opposée au mât (2) et forment deux crochets (35, 36) situés aux extrémités.

23. Dispositif selon la revendication 2, caractérisé en ce que la distance séparant les petits côtés (16, 18) est supérieure à la longueur de la semelle (7).

24. Dispositif selon les revendications 5 et 12, caractérisé en ce que les bords des grands côtés (15, 17) voisins des brides (27) sont en retrait par rapport auxdites brides (27).

Fig. 1

Fig. 2

EP 0 331 796 B1

Fig. 3

Fig. 4

Fig. 5

Fig. 6

EP 0 331 796 B1